# EUROPÄISCHE PATENTANMELDUNG

(11) **EP 0 838 259 A1**
(43) Veröffentlichungstag der Anmeldung: **29.04.1998**
(21) Anmeldenummer: 96810704.5
(22) Anmeldetag: 23.10.1996
(51) Int. Cl.: B01F 5/04, B29B 7/74

(54) **Einrichtung zum Zuführen von Additiven in einen Strom einer hochviskosen Flüssigkeit**

(71) Anmelder: Sulzer Chemtech AG, 8404 Winterthur (CH)
(72) Erfinder: Signer, Arno, 8542 Wiesendangen (CH)
(74) Vertreter: Heubeck, Bernhard

(57) **Zusammenfassung**

Die Einrichtung zum Zuführen von Additiven (4) in einen Strom (5) einer hochviskosen Flüssigkeit, in den die Additive einzumischen sind, umfasst für jedes einzuspeisende Additiv ein Zuführorgan (3). Dieses ist lösbar mit einem den Strom führenden Rohrstück (2) verbunden. Die Zuführorgane weisen jeweils einen Zuführkanal (30) für das Additiv auf, der quer zur Stromrichtung steht. Die Additive bilden nach der Einspeisung vorübergehend separate Phasen, die mit der Phase der hochviskosen Flüssigkeit koexistieren. Zumindest einem Teil der Zuführorgane ist jeweils ein in Stromrichtung orientiertes Wandstück (1) zugeordnet, das beidseitig von der hochviskosen Flüssigkeit umströmbar ist. Dessen näher beim Rohrzentrum liegende Innenseite (10) spannt eine Fläche auf, auf der zumindest angenähert die Austrittsöffnung (35) des Zuführorgans liegt. Stromabwärts nach der Austrittsöffnung ist das Wandstück als Ausbreitungsmittel für das zugeführte Additiv vorgesehen.

## Beschreibung

Die Erfindung betrifft eine Einrichtung zum Zuführen von Additiven in einen durch eine hochviskose Flüssigkeit gebildeten Produktstrom gemäss Oberbegriff von Anspruch 1. Die Erfindung bezieht sich auch auf eine Anlage mit einer derartigen Einrichtung sowie auf ein Verfahren, das unter Verwendung der Anlage durchführbar ist.

Als hochviskose Flüssigkeit ist insbesondere eine Polymerschmelze vorgesehen; als Additive niedrigviskose Flüssigkeiten, insbesondere Gleitmittel (nämlich Stearate, Alkohole, Paraffinöle, Weichmacher), die in Polymerschmelzen eingearbeitet werden sollen. Der Viskositätsunterschied zwischen Schmelze und Additiven ist in der Regel sehr gross; die Viskositäten können sich um einen Faktor in der Grössenordnung von zwei oder mehr Zehnerpotenzen unterscheiden.

Beim Einmischen von Gleitmitteln in eine Polymerschmelze müssen diese schliesslich homogen verteilt in Lösung gehen. In der Regel ist ein Anteil von rund 0,1 bis 6 % gelöstes Gleitmittel vorgesehen. Ein Gleitmittel wirkt beispielsweise beim Spritzgiessen von Polymeren als Trennmittel, das beim Entformen der Produkte aus dem Spritzwerkzeug seine Wirkung entfaltet.

Das Einmischen wird mit Vorteil mittels statischer Mischer durchgeführt. Aus der JP-A 07 100 825 (siehe PATENT ABSTRACTS OF JAPAN vol. 950 no.4) ist eine Anlage bekannt, in der mittels statischer Mischer ein thermoplastisches Polymer und ein flüssiges Additiv gemischt werden. Dabei wird ein Nebenstrom gebildet, in diesen das Additiv eingebracht und mit einem zusätzlichen statischen Mischer eingemischt. Dieses erste Gemisch wird vor einem Hauptmischer in den Hauptstrom eingespeist, so dass anschliessend im Hauptmischer ein homogenes Gemisch entsteht.

Wenn lediglich ein Additiv in einen hochviskosen Flüssigkeitsstrom eingemischt werden muss und es ausreicht, nur ein Zuführorgan zu verwenden, so kann die Mündung des Zuführorgans so angeordnet werden, dass das Additiv in axialer Richtung und zentral in den Flüssigkeitsstrom eintritt. Die Einmischung erfolgt ohne Probleme. Wird hingegen die Einspeisung radial durchgeführt, so wird - wie sich bei Versuchen gezeigt hat - anscheindend aufgrund von hydrodynamischen Kräften das Additiv, das als separate Flüssigkeitsphase vorliegt, zu der Rohrwand transportiert. An der Rohrwand kann es zu einer Depositbildung durch Koaleszenz des Additives kommen oder zu anderen ungünstigen Effekten, welche die angestrebte Vermischung beinträchtigen oder verunmöglichen.

In vielen Fällen ist der Einsatz einer Mehrzahl von Zuführorganen nötig, insbesondere wenn verschiedene Additive in das Polymer eingemischt werden müssen oder wenn Zuführorgane als Reserve vorgesehen sind, um bei Ausfall einzelner Zuführorgane durch Ersatz mit Reserveorganen den Betrieb aufrecht erhalten zu können. In diesen Fällen sind in der Regel radiale Zuführungen der Additive erforderlich, d. h. Zuführorgane mit jeweils einem Zuführkanal, der quer zur Stromrichtung steht. Damit ergeben sich die oben genannten Probleme. Es ist daher die Aufgabe der Erfindung, eine Zuführeinrichtung mit radialen Zuführungen für Additive zu schaffen, in der eine Depositbildung oder andere ungünstige Effekte ausbleiben. Diese Aufgabe wird durch die in Anspruch 1 definierte Einrichtung gelöst.

Die Einrichtung zum Zuführen von Additiven in einen durch eine hochviskose Flüssigkeit gebildeten Produktstrom, in den die Additive einzumischen sind, umfasst für jedes einzuspeisende Additiv ein Zuführorgan. Dieses ist lösbar mit einem den Produktstrom führenden Rohrstück verbunden. Die Zuführorgane weisen jeweils einen Zuführkanal für das Additiv auf, der quer zur Stromrichtung steht. Die Additive bilden nach der Einspeisung vorübergehend separate Phasen, die mit der Phase der hochviskosen Flüssigkeit koexistieren. Zumindest einem Teil der Zuführorgane ist jeweils ein in Stromrichtung orientiertes Wandstück zugeordnet, das beidseitig von der hochviskosen Flüssigkeit umströmbar ist. Dessen näher beim Rohrzentrum liegende Innenseite spannt eine Fläche auf, auf der zumindest angenähert die Austrittsöffnung des Zuführorgans liegt. Stromabwärts nach der Austrittsöffnung ist das Wandstück als Ausbreitungsmittel für das zugeführte Additiv vorgesehen.

Durch die Produktströmung auf beiden Seiten des Wandstücks ergibt sich, dass das zugeführte Additiv zwischen Stromlinien des Produktstroms eingebettet wird. Somit gelangt das Additiv nicht in Kontakt mit der Wand des den Produktstrom führenden Rohrstücks und die oben genannten ungünstigen Effekte bleiben aus.

Die abhängigen Ansprüche 2 bis 7 beziehen sich auf vorteilhafte Ausführungsformen der Erfindung. Gegenstand der Ansprüche 8 und 9 ist eine Anlage zum Zumischen von Additiven in eine Polymerschmelze, wobei die Einrichtung gemäss einem der vorangehenden Ansprüche zur Verwendung gelangt. Anspruch 10 bezieht sich auf ein entsprechendes Verfahren, das mittels der genannte Anlage durchgeführt wird.

Nachfolgend wird die Erfindung anhand der Zeichnungen erläutert. Es zeigen:
- Fig. 1: einen Ausschnitt aus einer erfindungsgemässen Einrichtung mit einem als Ausbreitungsmittel vorgesehenen Wandstück und mit entferntem Zuführorgan,
- Fig. 2: den entsprechenden Ausschnitt wie in Fig.1 mit einem Additiv abgebenden Zuführorgan,
- Fig. 3: einen Längsschnitt durch den Kopf eines Zuführorgans, das in Zusammenwirkung mit der erfindungsgemässen Einrichtung dargestellt ist,
- Fig. 4a: ein ebenes Wandstück, das an seinen Seiten an der Rohrwand befestigt ist,
- Fig. 4b: ein ringförmiges Wandstück,
- Fig. 5: einen Längsschnitt durch eine besondere Ausführungsform der erfindungsgemässen Einrichtung,
- Fig. 6: einen Querschnitt durch eine weitere Ausführungsform und
- Fig. 7: eine erfindungsgemässe Anlage.

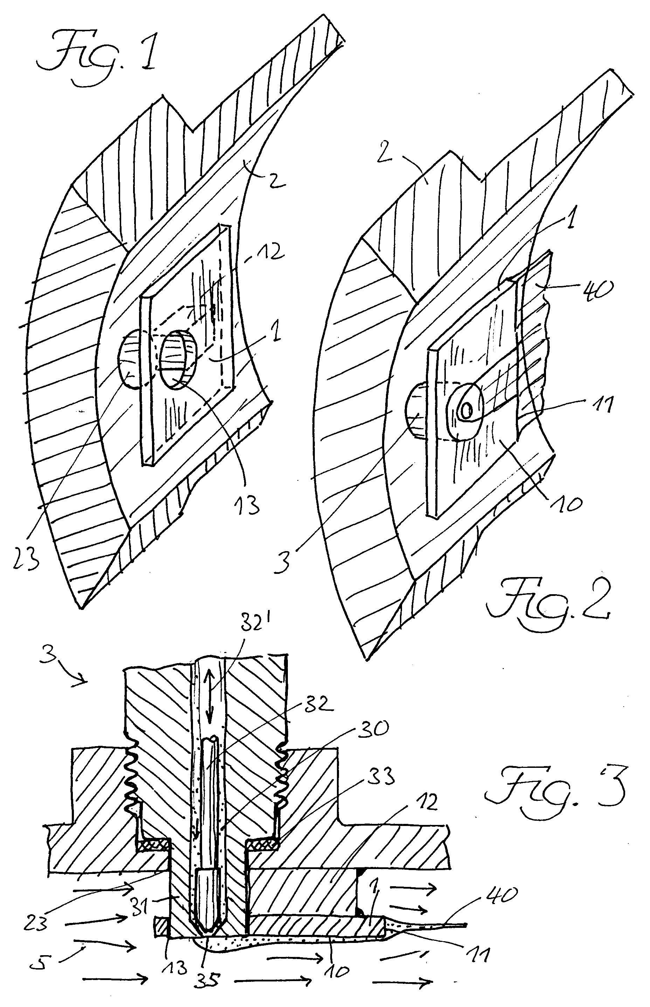

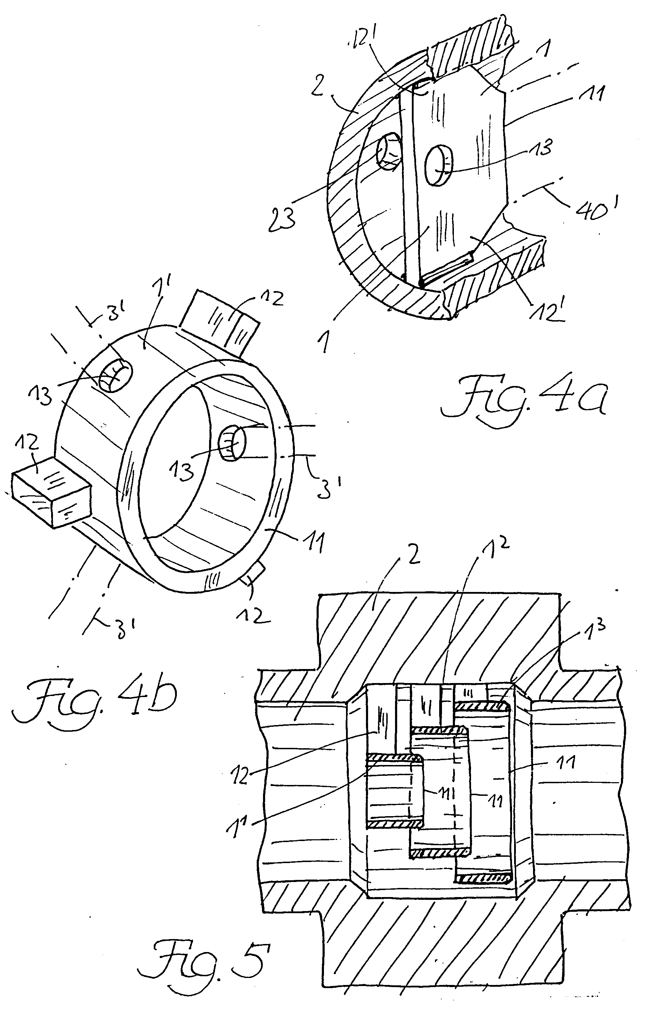

Die Komponenten des in Fig.1 gezeigten Ausschnitts der erfindungsgemässen Einrichtung sind die folgenden: Ein Wandstück 1 zur Vorverteilung eines zugeführten Additivs in einem Strom einer hochviskosen Flüssigkeit; ein den Strom führendes Rohrstück 2; und ein Verbindungsstück 12, mit dem das Wandstück 1 an dem Rohrstück 2 befestigt ist. Ein Zuführorgan 3 für das Additiv 4 - siehe Figuren 2 und 3 - fehlt in Fig.1. Das Wandstück 1 weist eine Bohrung 13 für die Mündung 31 des Zuführorgans 3 auf. In dem Rohrstück 2 ist ein Durchbruch 23 für das Zuführorgan 3 angeordnet, in den das Organ 3 lösbar eingesetzt werden kann.

Fig.2 zeigt die Zuführung des Additivs 4, wobei der Strom der hochviskosen Flüssigkeit nicht dargestellt ist. Der Zuführkanal 30 des Zuführorgans 3 steht quer zur Stromrichtung. Das Wandstück 1 ist in Stromrichtung orientiert und wird beidseitig von der hochviskosen Flüssigkeit umströmt. Die Innenseite 10 des Wandstücks 1 spannt eine Fläche auf, auf der die Austrittsöffnung 35 des Zuführkanals 30 liegt. Unter dem hydrodynamischen Einfluss der Strömung breitet sich das Additiv stromabwärts auf dem Wandstück 1 und insbesondere entlang der Endkante 11 aus und wird anschliessend beispielsweise als Fahne 40 (oder in Form von Tropfen) in den Flüssigkeitsstrom eingebettet, in dem es schliesslich durch Diffusion und unter Einwirkung von nicht dargestellten statischen Mischern in Lösung geht.

Das Zuführorgan 3 kann, wie Fig.3 zeigt, in das Rohrstück 2 eingeschraubt werden. Weitere, noch nicht genannte Komponenten sind: ein Dichtungsring 33 und eine Nadel 32, mit der die Zuführung des Additivs 4 gesteuert werden kann (Steuerbewegung als Doppelpfeil 32' angedeutet). Die Strömung der hochviskosen Flüssigkeit 5 ist durch lange Pfeile angedeutet, die Strömung des Additivs 4 durch kurze Pfeile.

Fig. 4a zeigt einen Ausschnitt aus einer erfindungsgemässen Einrichtung, bei der ein Wandstück 1 an seinen Seiten 12' an der Rohrwand 2 befestigt ist. Der stromabwärtsliegende Teil des Wandstücks 1 ist trapezförmig ausgebildet, so dass die Endkante 11 das Additiv nicht bis zur Rohrwand 2 leitet und die abströmende Fahne 40' auf einen inneren Bereich des Flüssigkeitsstroms beschränkt bleibt.

Das Wandstück 1 kann eben wie in den Figuren 1 bis 4a gezeigt oder gebogen sein. In Fig.4b ist ein ringförmiges Wandstück 1' dargestellt, dem drei Zuführorgane - mit strichpunktierten Linien 3' angedeutet - zugeordnet sind. Mit drei Verbindungsstücken 12 ist der Ring 1' an dem nicht dargestellten Rohrstück 2 befestigt.

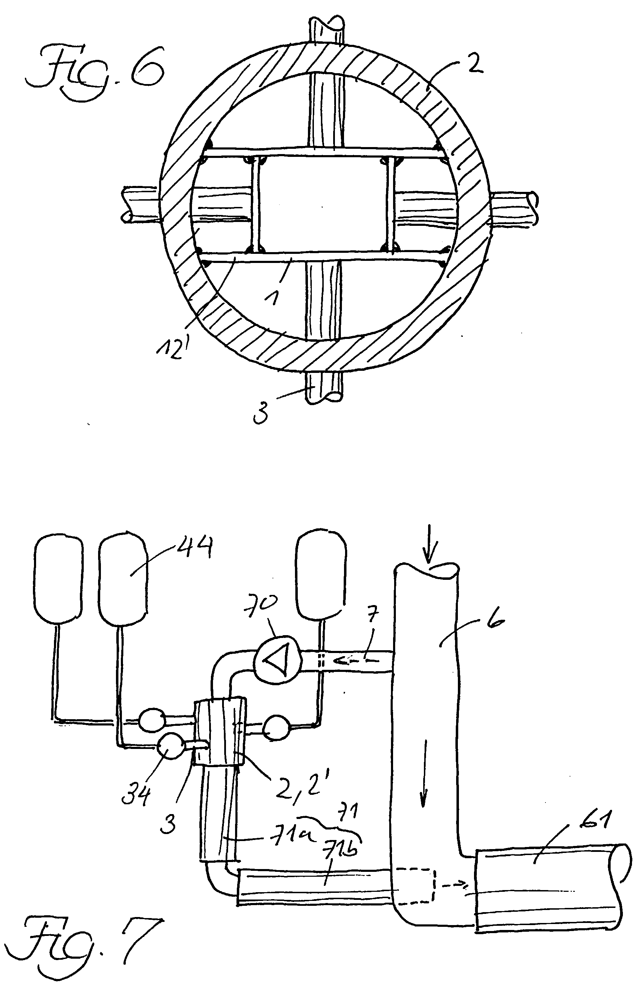

Der Längsschnitt in Fig.5 zeigt drei ringförmige Wandstücke 1¹, 1² und 1³, die konzentrisch angeordnet sind, wobei ein näher beim Zentrum des Rohrstücks 2 liegendes Wandstück 1¹ oder 1² stromaufwärts vor dem benachbarten, weiter aussen liegende Wandstück 1² bzw. 1³ liegt. Die Wandstücke 1¹, 1² und 1³ können auch auf gleicher Höhe angeordnet sein. In dem offenen Innenraum des Wandstücks 1³ kann beispielsweise auch ein statisches Mischelement angeordnet sein.

Fig.6 zeigt einen Querschnitt durch das Rohrstück 2 mit einer Draufsicht auf vier Wandstücke 1 mit vier zugeordneten Zuführorganen 3. Bei diesem Ausführungsbeispiel sind die Wandstücke 1 derart aus Platten aufgebaut, dass Teile dieser Platten die festen Verbindungen zu dem Rohrstück 2 herstellen. Die zwei an der Rohrwand 2 befestigten Wandstücke 1 sind mit Vorteil wie das in Fig.4a gezeigte Beispiel ausgebildet.

Die Wandstücke 1 der erfindungsgemässen Einrichtung haben eine weitere vorteilhafte Wirkung. Sie stützen den Kopf 31 der Zuführorgane 3, so dass diese nicht sehr massiv ausgebildet sein müssen, um einer Deformation durch die in der strömenden Flüssigkeit auftretenden Druckkräfte entgegenwirken zu können.

Fig.7 zeigt eine Anlage mit einer erfindungsgemässen Einrichtung 2', die in einer Nebenleitung 7 angeordnet ist. Eine Pumpe 70 fördert aus einer Hauptleitung 6 einen kleinen Teil der zu behandelnden hochviskosen Flüssigkeit zu der Einrichtung 2'. Anschliessend stellt ein Leitungsstück mit einem statischen Mischer 71 (oder statischen Mischern 71a, 71b) eine Verbindung zu der Hauptleitung 6 her; dabei mündet die Nebenleitung 7 vor einem statischen Mischer 61 in die Hauptleitung 6 ein. Die Additive werden aus Reservoiren 44, durch Leitungen 43, mittels Dosiereinrichtungen 34 und durch die Zuführorgane 3 in die Einrichtung 2' eingespeist.

## Patentansprüche

1. Einrichtung zum Zuführen eines oder mehrerer Additive (4) in einen durch eine hochviskose Flüssigkeit gebildeten Produktstrom (5), in den die Additive einzumischen sind, wobei jedes Additiv über ein Zuführorgan (3) einspeisbar ist, die Zuführorgane jeweils lösbar mit einem den Produktstrom führenden Rohrstück (2) verbunden sind sowie einen Zuführkanal (30) für das Additiv aufweisen, der quer zur Stromrichtung steht, und wobei die Additive nach der Einspeisung vorübergehend separate Phasen bilden, die mit der Phase der hochviskosen Flüssigkeit koexistieren, dadurch gekennzeichnet, dass zumindest einem Teil der Zuführorgane jeweils ein in Stromrichtung orientiertes Wandstück (1) zugeordnet ist, das beidseitig von der hochviskosen Flüssigkeit umströmbar ist und dessen näher beim Rohrzentrum liegende Innenseite (10) eine Fläche aufspannt, auf der zumindest angenähert die Austrittsöffnung (35) des Zuführorgans liegt, wobei stromabwärts nach der Austrittsöffnung das Wandstück als Ausbreitungsmittel (11) für das zugeführte Additiv vorgesehen ist.

2. Einrichtung nach Anspruch 1, dadurch gekennzeichnet, dass jedes einem Zuführorgan (3) zugeordnete Wandstück (1) über mindestens ein Verbindungselement (12) starr mit dem Rohrstück (2) verbunden ist und dass in dem Wandstück ein Durchbruch (13), insbesondere eine Bohrung für eine Mündung (31) des Zuführorgans vorgesehen ist.

3. Einrichtung nach Anspruch 1 oder 2, dadurch gekennzeichnet, dass zumindest ein Wandstück (1) einer Mehrzahl von Zuführorganen (3) zugeordnet ist.

4. Einrichtung nach einem der Ansprüche 1 bis 3, dadurch gekennzeichnet, dass zumindest ein Wandstück (1') ringförmig, insbesondere kreisringförmig ausgebildet ist.

5. Einrichtung nach Anspruch 4, dadurch gekennzeichnet, dass eine Mehrzahl von ringförmigen Wandstücken (1¹, 1², 1³) konzentrisch angeordnet sind, wobei ein näher beim Rohrzentrum liegendes Wandstück (1¹; 1²) stromaufwärts vor dem benachbarten, weiter aussen liegende Wandstück (1²; 1³) oder auf gleicher Höhe wie dieses Wandstück angeordnet sein kann.

6. Einrichtung nach einem der Ansprüche 1 bis 3, dadurch gekennzeichnet, dass eine Mehrzahl von Wandstücken (1) vorgesehen ist und dass die Wandstücke derart aus Platten aufgebaut sind, dass Teile dieser Platten die festen Verbindungen (12') zu dem Rohrstück (2) herstellen.

7. Einrichtung nach Anspruch 6, dadurch gekennzeichnet, dass mindestens eines der Wandstücke (1) in einem stromabwärts liegenden Bereich trapezförmig ausgebildet ist.

8. Anlage mit einer Einrichtung gemäss einem der Ansprüche 1 bis 7, dadurch gekennzeichnet, dass die Einrichtung in einer Nebenleitung (7) mit nachfolgenden statischen Mischern (71a, 71b) angeordnet ist und die Nebenleitung vor einem statischen Mischer (61) in eine Hauptleitung (6) einmündet.

9. Anlage nach Anspruch 7, dadurch gekennzeichnet, dass die Zuführorgane steuerbar sind.

10. Verfahren zum Einmischen von niedrigviskosen Additiven in einen hochviskosen Produktstrom, insbesondere zum Einmischen von Gleitmitteln in Polymerschmelzen, unter Verwendung einer Anlage gemäss Anspruch 7 oder 8.
